## Europäisches Patentamt
## European Patent Office
## Office européen des brevets

(11) Veröffentlichungsnummer: **0 379 695**
**A1**

# (12) EUROPÄISCHE PATENTANMELDUNG

(21) Anmeldenummer: **89123083.1**

(22) Anmeldetag: **14.12.89**

(51) Int. Cl.5: **H04M 3/24, H04Q 11/04**

(30) Priorität: **23.12.88 DE 3843564**

(43) Veröffentlichungstag der Anmeldung:
**01.08.90 Patentblatt 90/31**

(84) Benannte Vertragsstaaten:
**AT BE CH DE ES FR GB IT LI NL SE**

(71) Anmelder: **Standard Elektrik Lorenz Aktiengesellschaft**
**Lorenzstrasse 10**
**D-7000 Stuttgart 40(DE)**

(72) Erfinder: **Matt, Hans Jürgen, Dr.**

**Schumannstrasse 6**
**D-7148 Remseck 1(DE)**
Erfinder: **Karpovsky, Mark Girsh, Prof. Dr.**
**Drumlinroad 63**
**Newton, Mass. 02159(US)**
Erfinder: **Levitin, Lev Berovich, Prof. Dr.**
**Monmouth Court 11**
**Brookline, Mass. 02146(US)**

(74) Vertreter: **Brose, Gerhard et al**
**Standard Elektrik Lorenz AG Patent- und Lizenzwesen Postfach 30 09 29**
**D-7000 Stuttgart 30(DE)**

(54) **Verfahren zur Überprüfung von Verbindungs- und/oder Schalteinrichtungen und/oder -leitungen.**

(57) Es wird ein Verfahren zur Überprüfung von Verbindungs-und/oder Schalteinrichtungen, insbesondere einer Raummultiplex-Koppelfeldmatrix (K), bei der eine oder mehrere einer Vielzahl von Eingangsleitungen $(D_i, C_j)$ mit einer oder mehreren einer Vielzahl von Ausgangsleitungen $(Y_k)$ verbindbar sind, und bei der zur Überprüfung die Bildung eines Prüfwortes erfolgt, beschrieben. Aus den Signalen auf den Eingangsleitungen $(D_i, C_j)$ werden laufend ein erstes Prüfwort (PB1) und ferner nach denselben Bildungsgrundsätzen aus den Signalen auf den Ausgangsleitungen $(Y_k)$ ein weiteres Prüfwort (PB2) abgeleitet. Beide Prüfwörter werden untereinander verglichen. Bei einer Abweichung erfolgt eine Fehleranzeige.

FIG.3

## Verfahren zur Überprüfung von Verbindungs- und/oder Schalteinrichtungen und/oder -leitungen.

Die Erfindung betrifft ein Verfahren der im Oberbegriff des Patentanspruches 1 genannten Art.

Es ist bekannt, zur Fehlererkennung und zur Fehlerkorrektur Paritäts- und Prüfbits oder allgemein Prüfwörter zu verwenden, zu generieren, zu übertragen und aus deren Syndrom z.B. am Ende eines Übertragungskanals Schlüsse zu ziehen, ob die Signale einwandfrei, d.h fehlerfrei übertragen wurden.

Das gilt sinngemäß auch für die Übertragung elektrischer Signale über Schaltsysteme und -netze wie z.B über eine optische Strecke oder über eine Raummultiplex-Koppelfeldmatrix. Um aus einer bestimmten Zahl aufeinanderfolgender Bits, die ein Signal bilden, ein Prüfwort zu ermitteln und um ggf. aus den empfangenen Bits durch Auswertung Rückschlüsse auf das Vorhandensein von Fehlern im Übertragungskanal zu ziehen, gibt es eine Vielfalt von Verfahren, die als Theorie der Fehlererkennung und -korrektur bekannt sind.

Bei derartigen Korrekturverfahren benötigt man immer eine gewisse Zeit, bis eine Anzahl von Bits, die die zu überprüfende Einheit bilden, übertragen ist. Erst wenn alle diese Bits empfangen worden sind, kann aus ihnen das Syndrom ermittelt und daraus Schlüsse gezogen werden. Sind mehrere Kanäle an einem Übertragungssystem beteiligt, so muß ggf. für jeden dieser Kanäle ein derartiges Verfahren angewandt werden. Dies erfordert einen relativ hohen schaltungsmäßigen Aufwand. Außerdem sind diese Verfahren unbrauchbar, wenn die Signale auf einer Leitung nicht stets in dieselbe Richtung laufen, bspw. bei Busleitungen.

Es ist nun Aufgabe der vorliegenden Erfindung, ein Verfahren der eingangs genannten Art derart weiterzuentwickeln, daß der schaltungsmäßige Aufwand verringert und dabei die Leistungsfähigkeit des Prüfverfahrens verbessert wird in dem Sinne, daß zu jedem Zeitpunkt nicht nur die zu übermittelnden Informationen sondern auch die volle Funktionsfähigkeit eines Systems geprüft wird. Das Verfahren ist insbesondere für eine Raummultiplex-Koppelfeldmatrix geeignet.

Diese Aufgabe wird erfindungsgemäß durch ein Verfahren nach der Lehre des Patentanspruches 1 und eine Anordnung nach der Lehre des Patentanspruches 12 gelöst. Vorteilhafte Weiterbildungen sind in den Unteransprüchen definiert.

Erfindungsgemäß wird ein Prüfwort, d.h. im einfachsten Fall ein Paritätsbit, nicht aus zeitlich nacheinander auf einem Kanal gesendeten oder empfangenen Zeichen abgeleitet, sondern es wird das Prüfwort vielmehr zu jedem Zeitpunkt aus der Vielzahl der gerade dann auf einer Vielzahl von Kanälen oder Leitungen vorhandenen Signale gebildet, und zwar an den miteinander zu vergleichenden Stellen (bspw. Eingang und Ausgang) des Systems. Das übermittelte Prüfwort wird mit dem am Ausgang des Systems gebildeten Prüfwort verglichen (Syndromprüfung). Weichen beide Prüfwörter voneinander ab, d.h. ist das Syndrom ungleich, so liegt ein Fehler vor. Während bei den bekannten Verfahren die Bildung der Prüfwörter jeweils zeitseriell und kanalindividuell erfolgt, erfolgt sie bei der Erfindung zeitparallel und systemumfassend, d.h. nicht kanalindividuell.

Das Prüfwort am Eingang ist freilich - bei korrekter Übertragung - nur dann gleich dem Prüfwort am Ausgang, wenn jedes Eingangssignal auch als Ausgangssignal wieder vorliegt, z.B. bei einer Raummultiplex-Koppelfeldmatrix, falls die Zuordnung eines jeden Eingangs zu einem jeden entsprechenden Ausgang 1:1 ist. Falls die Zuordnung eines Eingangs zu einem entsprechenden Ausgang nicht im Sinne 1:1 ist, also wenn z.B. ein Eingang auf mehrere Ausgänge geschaltet wird (z.B. ein Fernsehprogramm von mehreren Teilnehmern empfangen wird), so wird dieses erfindungsgemäß entsprechend durch ein Hilfsprüfwort berücksichtigt.

Mit dem erfindungsgemäßen Verfahren kann man nicht nur die Leitungen und Verbindungen einer Raumkoppelfeld-Matrix, sondern ganz allgemein alle Systeme überprüfen, sofern jedem zu einem bestimmten Zeitpunkt aus einem ersten Satz von Signalen abgeleiteten Prüfwort eindeutig ein aus einem zweiten Satz von Signalen abgeleitetes Prüfwort zugeordnet werden kann, so daß ein Vergleich der Prüfwörter - ggf. unter Berücksichtigung von systembedingten Korrekturen - die Feststellung ermöglicht, daß alle Kanäle und Schalteinrichtungen einwandfrei funktionieren. Unter diesen Voraussetzungen kann das erfindungsgemäße Verfahren auch gleichzeitig auf verschiedenen Hierarchieebenen eines Systems eingesetzt werden. Die Fehlererkennung kann in bekannter Weise mit einer Fehlerkorrektur verbunden sein.

Ausführungsbeispiele der Erfindung und ihre vorteilhaften Weiterbildungen werden im folgenden anhand der beigefügten Zeichnungen beschrieben. Es stellen dar:

Figur 1 eine Raummultiplex-Koppelfeldmatrix K nach dem Stande der Technik,

Figur 2 der Aufbau einer Schaltzelle S von Fig. 1,

Figur 3 als Ausführungsbeispiel eine Raummultiplex-Koppelfeldmatrix, ähnlich wie in Fig. 1, unter Einbeziehung der Erfindung.

Figur 4 als Ausführungsbeispiel einen Anschluß an eine Busleitung mit erfindungsgemäßer Überwachung.

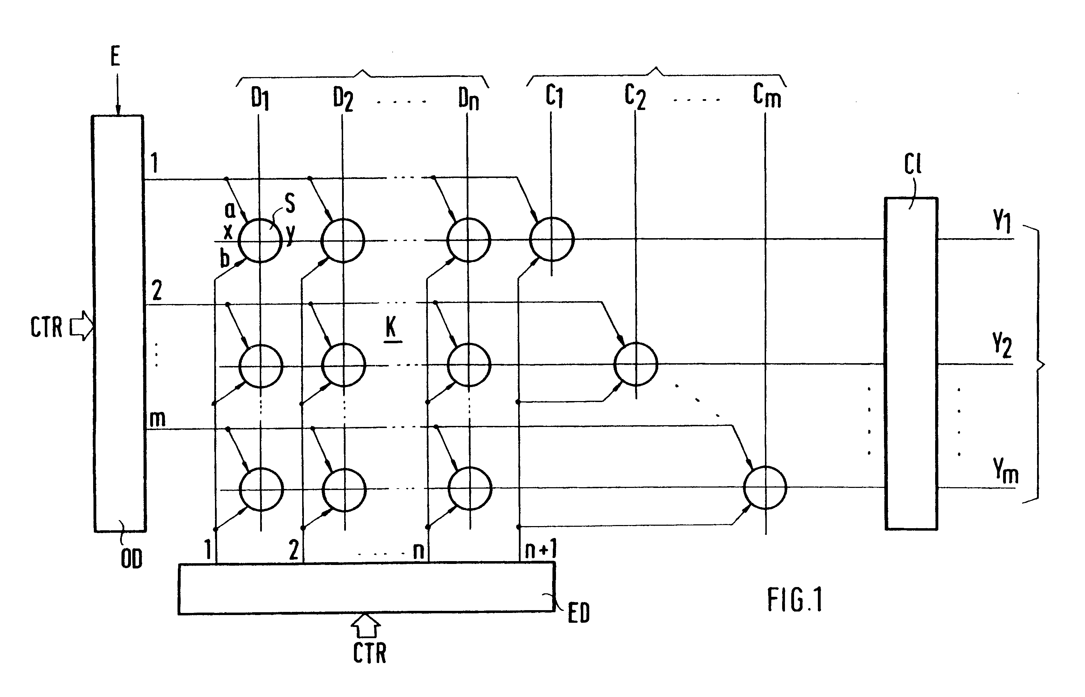

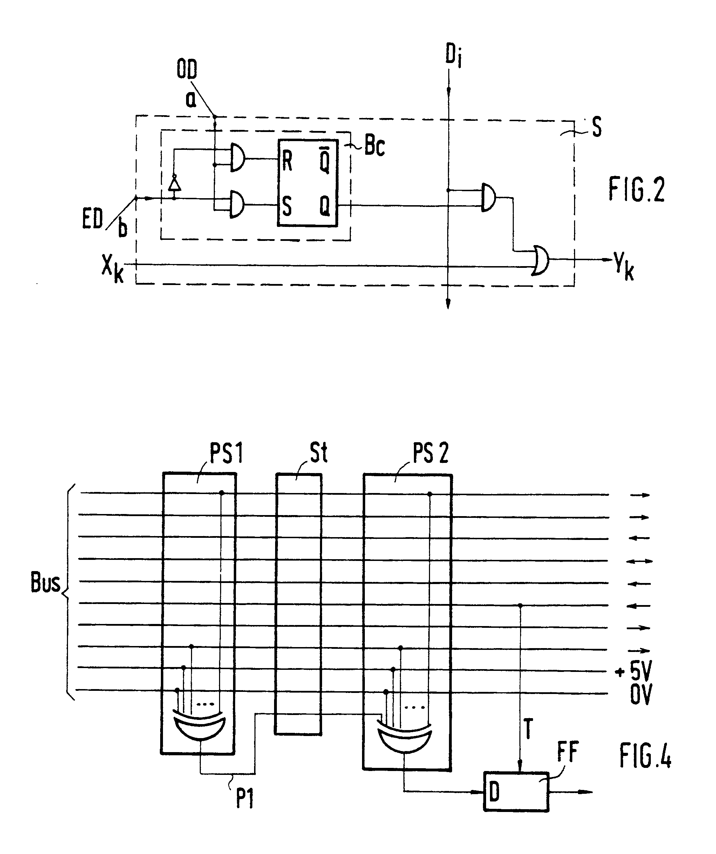

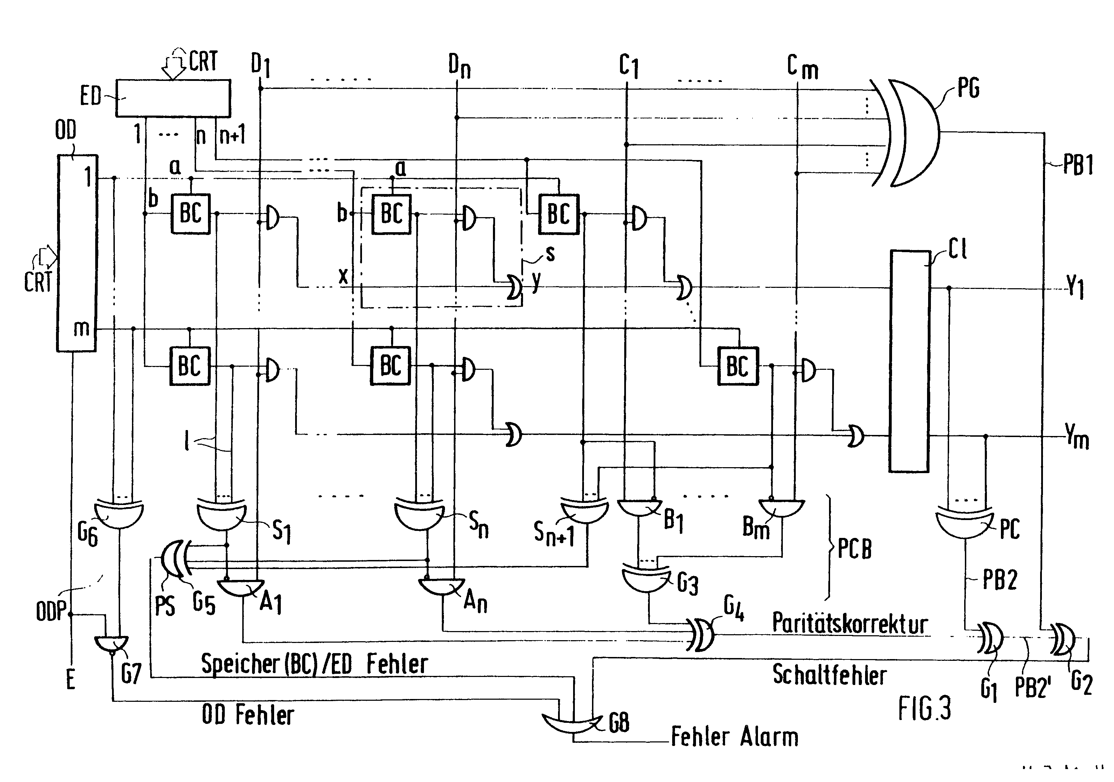

Figur 1 zeigt den bekannten Aufbau eines Koppelfeldes K, mit (n+m) Eingangsleitungen und m Ausgangsleitungen als [(n+m) x m]-Schaltmatrix. Die (n+m) Eingangsleitungen sind in n Eingangsleitungen $D_1$, $D_2$, ..., $D_n$ und in m Eingangsleitungen $C_1$, $C_2$, ..., $C_m$ (Erweiterungseingänge) aufgeteilt. Es sind ferner die m Ausgangsleitungen $Y_1$, $Y_2$, ..., $Y_m$ vorgesehen. Vorzugsweise ist n = m = 16. An jedem Schnittpunkt einer Eingangsleitung $D_i$ mit einer Ausgangsleitung $Y_k$ befindet sich eine Schaltzelle S mit Steuereingängen a und b gemäß Fig. 2. Alle Steuereingänge a einer Zeile sind mit der dieser Zeile zugeordneten Steuerleitung eines Ausgangsdekoders OD verbunden. Alle Steuereingänge b einer Spalte sind mit der zugeordneten Steuerleitung eines Eingangsdekoders ED verbunden. Bei den Erweiterungseingangsleitungen C ist die ersichtliche diagonale Zuordnung gegeben. Die Ansteuerung des Ausgangsdekoders OD und des Eingangsdekoders ED erfolgt in bekannter Weise und ist durch einen Bus CTR angedeutet. Die Aktivierung des Ausgangsdekoders OD erfolgt über eine Leitung E. In die Ausgangsleitungen $Y_k$ ist eine Taktschaltung CI eingeschaltet.

Befinden sich die Eingänge a und b einer Schaltzelle S (Fig. 2) im Zustand 1, d.h. ist a = b = 1, dann ist $Y_k= D_i$v $x_k$ d.h. es erscheint ein Ausgangssignal 1 auf der Ausgangsleitung $y_k$, wenn entweder auf der zugeordneten Eingangsleitung $D_i$ oder auf der Eingangsleitung $x_k$, die von der in der Zeile vorgeordneten Schaltzelle kommt, eine 1 vorliegt. Dies ergibt sich aus dem Aufbau der Schaltzelle S unter Verwendung herkömmlicher Verknüpfungsglieder und eines bistabilen Flip-Flops gem. Fig. 2. Der Schaltzustand der Schaltzelle S wird durch den Zustand des Ausgangs Q des Flip-Flops bestimmt. Es bildet mit dem vorgeschalteten UND-Verknüpfungsgliedern und einem Inverter einen binären Speicher BC. Q wird 1, wenn a = b = 1 ist. Ist a = 1 und b = o, ändert sich Q nach 0. Ist a = o, dann bleibt Q unverändert. Normalerweise gibt der Ausgangsdekoder auf einer Leitung 1, auf allen anderen 0 ab, sobald er über E aktiviert wird. Ansonsten sind alle Leitungen a gleich 0. Damit wird erreicht, daß auf jede Ausgangsleitung $Y_k$ immer genau eine Eingangsleitung $D_i$ oder $C_j$ durchgeschaltet ist.

Eine Koppelfeldmatrix unter Einbeziehung von Prüfeinrichtungen gemäß einem Ausführungsbeispiel der Erfindung ist in Fig. 3 in detaillierter Ausführung dargestellt.

Die an den Eingangsleitungen $D_1$, $D_2$, ..., $D_n$ und den Erweiterungseingangsleitungen $C_1$, $C_2$, ..., $C_m$ eingehenden Daten gelangen - parallel zu ihrer Zuleitung an die einzelnen Schaltzellen S - an einen Paritätsgenerator PG, der daraus ein Prüfwort PB1 (im Beispiel 1 Prüfbit) ableitet. Die Ableitung erfolgt nach allgemeinen Regeln, d.h. etwa derart wie in Fig. 3 dargestellt, daß ein Prüfbit "1" ist, wenn die Zahl der Eingangsleitungen, die das Signal 1 führt, ungerade ist, und daß "0" ist, wenn die Zahl der Eingangsleitungen, die 1 führen, gerade ist. Andere Zuordnungen sind selbstverständlich möglich. Das Prüfbit PB1 gelangt an einen Eingang des XOR-Verknüpfungsgliedes $G_2$.

Die Ausgangsleitungen $Y_1$, ..., $Y_n$ gelangen an die Paritätsprüfeinrichtung PC. In ihr wird allgemein ein Prüfwort, hier nach Fig. 3 ein Prüfbit PB2 abgeleitet, und zwar - das ist wesentlich - nach denselben Regeln, nach denen auch im Paritätsgenerator PG das Prüfbit PB1 abgeleitet worden ist, d.h. es ist 1 bei einer ungeraden Zahl von Eingangsleitungen, die 1 führen, und es ist 0 bei einer geraden Zahl von Eingangsleitungen, die 1 führen. Unter der Voraussetzung, daß jede Eingangsleitung $D_i$, $C_j$ mit genau einer Ausgangsleitung $Y_k$ verbunden ist, sind die Prüfworte bzw. Prüf- oder Paritätsbits PB1 und PB2 gleich (n+m>m).

Das Prüfbit PB2 gelangt an den ersten Eingang des XOR-Verknüpfungsglieds $G_1$. Ist PB2 gleich 1, so wird also der Ausgang $G_1$ auch 1, falls nicht am anderen Eingang von $G_1$ ebenfalls (und zwar der Korrektur wegen) 1 anliegt. Sind PB1 und PB2 nun beide gleich 1, so ergibt sich, da es sich um ein exklusives ODER-Verknüpfungsglied handelt, ein Signal 0 am Ausgang von $G_2$, also somit kein FEHLER-Alarm am Ausgang des ODER-Verknüpfungsgliedes $G_8$. Die Prüfung verlief dann positiv, d.h. sie hat ergeben, daß kein Fehler zwischen Eingang und Ausgang gegeben ist, mithin, daß die Signale fehlerfrei vom Eingang zum Ausgang des Systems gelangt sind.

Die Tatsache, daß aufgrund der Ansteuerung über die Dekoder OD und ED ggf. eine das Signal 1 führende Eingangsleitung $D_i$, $C_j$ nicht nur mit einer Ausgangsleitung, sondern mit mehreren Ausgangsleitungen $Y_k$ oder aber auch mit keiner Ausgangsleitung verbunden sein kann, wird in einer Paritätskorrektureinrichtung PCB berücksichtigt, denn das hätte zur Folge, daß das Prüfbit PB1 mit dem Prüfbit PB2 nicht übereinstimmt. Im Ausführungsbeispiel nach Fig. 3 wird die Paritätskorrektureinrichtung durch die XOR-Verknüpfungsglieder $S_1$, ..., $S_{n+1}$, die UND-Verknüpfungsglieder $B_1$, ..., $B_m$, $A_1$, ..., $A_n$ und die XOR-Verknüpfungsglieder $G_3$, $G_4$ gebildet, die ein Hilfsprüfbit als Sonderfall eines Hilfsprüfworts bildet. Die Ausgänge aller einer Eingangsleitung $D_i$ zugeordneten Speicher BC sind über Leitungen 1 jeweils mit einem Eingang von $S_i$ verbunden. Die Ausgänge von $S_1$, ..., $S_M$ gelangen an die invertierten Eingänge von UND-Verknüpfungsgliedern $A_1$, ..., $A_n$, deren Ausgänge wiederum an die Eingänge von $G_4$. Die Eingangsleitungen $D_1$, ..., $D_n$ sind ferner direkt jeweils mit den anderen Eingängen von $A_1$, ..., $A_n$ verbunden. Die Ausgänge

der Speicher BC in den $C_1$, ..., $C_m$ zugeordneten Spalten gelangen erstens alle an die Eingänge des einen XOR-Verknüpfungsgliedes $S_{n+1}$, zum anderen an invertierte Eingänge von UND-Verknüpfungsgliedern $B_1$, ..., $B_m$. $C_1$, ..., $C_m$ selbst gelangen an die jeweils anderen, nicht invertierten Eingänge von $B_1$, ..., $B_m$, deren Ausgänge alle an das XOR-Verknüpfungsglied $G_3$ gelangen. Dessen Ausgang gelangt wieder an einen Eingang von $G_4$.

Die Funktion ist folgende: Das Paritätsbit PB1 am Ausgang von PG ändert sich nicht, wenn ein Eingangssignal mehrfach zu den Ausgängen $y_n$ gegeben wird. Ist eine bestimmte Eingangsleitung $D_i$ (i = 1, ..., n) mit einer geraden Anzahl von Ausgangsleitungen $Y_k$ verbunden und ist das Signal auf $D_i$ gleich 1, dann ändert sich das Paritätsbit PB2 am Ausgang des Paritätsgenerators PC. Ansonsten, d.h. wenn $D_i$ mit einer ungeraden Zahl von Ausgangsleitungen $Y_k$ in Verbindung steht, ändert es sich nicht. Um diese Veränderung zu kompensieren, wird die Parität aller binären Speicherzellen BC, die mit der Eingangsleitung $D_i$ verbunden sind, über die XOR-Verknüpfungsschaltungen $S_i$ abgeleitet, invertiert und dem UND-Verknüpfungsglied $A_i$ zusammen mit dem Signal von $D_i$ zugeführt. Auf diese Weise werden n Hilfsprüfbits an den Ausgängen $A_i$ (i = 1, ..., n) abgeleitet.

Das Paritäts- und Prüfbit PB2 verändert sich ferner, wenn eine Leitung $C_j$ (j = 1, ... m) nicht mit der entsprechenden Ausgangsleitung $Y_k$ verbunden ist und das Signal auf $C_j$ gleich "1" ist. Ansonsten erfolgt keine Veränderung der Parität am Ausgang. Das Hilfsprüfbit für die Eingangsleitungen $C_1$, ..., $C_m$ wird von den UND-Verknüpfungsgliedern $B_1$, ..., $B_m$ und von dem XOR-Verknüpfungsglied $G_3$ abgeleitet. Das Hilfsprüfbit zur Paritätskorrektur für die gesamte Schaltung erhält man dadurch, daß die Ausgänge der Verknüpfungsglieder $A_i$ und des Verknüpfungsgliedes $G_3$ an das XOR-Verknüpfungsglied $G_4$ gelangen.

Sind z.B. für eine Eingangsleitung $D_i$ zwei binäre Speicherzellen BC eingeschaltet, d.h. haben sie am Ausgang Q das Signal 1, dann ergibt sich am Ausgang des zugeordneten XOR-Verknüpfungsgliedes $S_i$ der Ausgang 0 und nach Inversion am Eingang des nachgeschalteten UND-Verknüpfungsgliedes $A_i$ ein Signal 1. Hat nun auch noch der andere Eingang desselben UND-Verknüpfungsgliedes $A_i$ am Eingang 1, weil die Eingangsleitung $D_i$ das Signal 1 führt, so ist der Ausgang des UND-Verknüpfungsgliedes $A_i$ gleich 1. Dies hat zur Folge, daß auch an dem nachgeschalteten Eingang des XOR-Verknüpfungsgliedes $G_4$ eine 1 vorliegt.

Für die Dateneingänge $C_i$ reicht ein XOR-Verknüpfungsglied $S_{n+1}$. Die anderen können entfallen, da pro Spalte nur eine Schaltzelle S und demgemäß auch nur eine binäre Speicherzelle BC vorgesehen ist.

Ist z.B. eine ein Signal 1 führende Eingangsleitung $D_i$ oder $C_j$ auf zwei Ausgänge $Y_k$ durchgeschaltet, dann führt dies zunächst zu einem Paritätsbit PB1 gleich 1, während gleichzeitig das Paritätsbit PB2 gleich 0 ist. Da nun aber über $S_i$ und $A_i$ ein Signal 1 an $G_4$ gelangt, wird der Ausgang $G_1$ wieder entsprechend korrigiert. Der Ausgang von $G_2$ ist also derselbe wie im Falle einer Gleichheit von PB1 und PB2.

Um zusätzlich Fehler in den Zustandsspeichern BG der Koppelfeldmatrix zu erkennen, wird ein Paritäts- und Prüfbit für alle [(n+1)·m] Speicherzellen BC in einer Speicherparitätsprüfeinrichtung PS abgeleitet. Sie wird in Fig. 3 durch ein XOR-Verknüpfungsglied $G_5$ gebildet. Bei ungeradzahligem m muß noch ein Inverter dem Gatter GS nachgeschaltet werden.

Zusätzlich können Fehler an den Steuerausgängen des Ausgangsdekoders OD, wenn z.B. mehr als ein Steuerausgang 1 ist, mittels einer Ausgangsparitätsprüfeinrichtung ODP erfaßt werden, die in Fig. 3 durch das XOR-Verknüpfungsglied $G_6$ und das NAND-Verknüpfungsglied $G_7$ gebildet wird.

Beim Ausführungsbeispiel erfolgen also am Eingang wie am Ausgang Paritätsprüfungen, ggf. unter Einbeziehung gewisser Korrekturen, die bei einwandfreiem Funktionieren des überprüften Koppelfeldes oder, verallgemeinert ausgedrückt, der überprüften zu verschaltenden Einrichtungen, Übereinstimmung ergeben müssen. Dies wird in einem Vergleich festgestellt (Syndromberechnung). Die zusätzlichen Fehler lassen sich mit Schaltungen detektieren, die die natürliche, d.h. vorhandene Schaltungsredundanz ausnutzen, um fehlerhafte Zustände zu erkennen.

Die beschriebene Überwachung kann im laufenden Betrieb (on-line) erfolgen. Sie erfaßt sowohl dauernd vorhandene oder aber auch nur intermittierend auftretende Fehler. Die selbsttätige Fehlerfeststellung ist insbesondere zur Feststellung intermittierend auftretender Fehler, die bei einer Off-line Prüfung unentdeckt blieben, wichtig. Anhand der Häufigkeit auftretender Fehler kann der Grad des Defektes der Systemeinheit erkannt werden.

Verallgemeinert erfolgt die Prüfung am Eingang wie am Ausgang mit Hilfe bekannter Prüfcodes (vgl. J. MacWilliams and N.J.A. Sloane, Error Correcting Codes, North Holland, 1978), im Ausführungsbeispiel angewandt auf ein einziges Prüfbit. Diese Prüfung ergibt eine Gesamtparität der (n+m) Eingangssignale im Paritätsgenerator PG. Das entsprechende Paritätsbit am Ausgang wird von der Paritätsprüfeinrichtung PC abgeleitet. Beide Einrichtungen basieren auf linearen Blockcodes, die aus XOR-Verknüpfungsgliedern aufgebaut werden können. Die Prüf-oder Paritätsbits, die durch die Einheiten PG und PC abgeleitet werden, können verschieden sein, da zulässigerweise einige der Eingangsleitungen mit keiner Ausgangsleitung oder mit mehreren Ausgangsleitungen verbunden sein können. Dies wird anhand des Inhalts der binären Speicherzellen BC, die die Schaltzellen S bestimmen, korrigiert. Das Paritätskorrekturbit wird von der Paritätskorrektureinrichtung PCB erzeugt und in dem XOR-Verknüpfungsglied $G_1$ zu dem Signal am Ausgang der Paritätsprüfeinrichtung PC hinzuaddiert. Das Ergebnis $PB2'$ wird mit PB1 in $G_2$ verglichen. Ist der Ausgang von $G_2$ gleich 1, so zeigt dies einen Fehler an.

Es sind insgesamt $[mn + 5m + 3n + 1]$ je mit zwei Eingängen versehene Torschaltungen als zusätzliche Schaltelemente erforderlich. Dieser Schaltungsaufwand ist nur ein Bruchteil der Komplexität der gesamten Schalteinrichtungen.

Diese eingebaute strukturelle Redundanz gestattet es, die folgenden Fehler (sowohl permanent als auch intermittierend) festzustellen:

(a) Im Durchschaltebereich (Breitband):

1. Alle einzelnen Fehler (allgemein: alle Fehler ungerader Anzahl) in den Schaltzellen und in der Taktschaltung;

2. alle einzelnen (ungeraden) Fehler im Paritätsgenerator PG, in der Paritätsprüfeinrichtung PC und in den Verknüpfungsgliedern $G_1$ und $G_2$;

3. alle einzelnen (ungeraden) Fehler in der Paritätskorrektureinrichtung PCB.

(b) Im Steuerbereich (Schmalband):

4. Alle einzelnen (ungeraden) Fehler im Speicher und an den Ausgängen des Eingangsdekoders, wie z.B. den Ausfall der Dekodierung oder eine Doppel-(gerade)Dekodierung. Ausfall einer Dekodierung bedeutet, daß alle Ausgänge des Dekoders gleich 0 sind, während das Aktivierungssignal an Leitung E gleich 1 ist;
Doppel-Dekodierung (gerade) bedeutet, daß zwei (oder eine gerade Anzahl) der Ausgänge gleich 1 sind;

5. alle einfachen (ungeraden) Fehler an den Ausgängen des Ausgangsdekoders und in der Ausgangsparitätsprüfung;

6. alle einfachen (ungeraden) Fehler der Speicherparitätsprüfung;

7. alle mehrfachen Fehler (insbesondere Doppelfehler), die Kombinationen zweier Fehler der folgenden Typen sind: 1 und 4; 1 und 5; 1 und 6; 2 und 4; 2 und 5; 2 und 6; 3 und 5; 3 und 6; 4 und 5; 4 und 6.

Außerdem werden alle Dauerfehler entdeckt, die sich als Fehler der oben aufgezeigten Typen für bestimmte Daten und Steuerbefehle darstellen.

Die Überprüfung gemäß der Erfindung ist eine on-line-Prüfung , die dauernd unter Arbeitsbedingungen des gesamten Systems stattfindet und keine zusätzlichen Testausrüstungen oder Schaltvorgänge in irgendeinem Testzustand erforderlich macht.

Bei der Überprüfung gemäß der Erfindung ist es auch unerheblich, in welche Richtung die Signale auf den untersuchten Leitungen laufen und ob sie immer in dieselbe Richtung laufen. Diese Erfindung kann gemäß Figur 4 deshalb bspw. auch angewendet werden, um bei einem Anschluß an einen aus vielen Leitungen bestehenden Bus festzustellen, ob auf dem Bus und bei der daran angeschlossenen Schaltung dieselben Signale vorliegen. Damit werden letzlich die dazwischenliegenden Kontakte (St) überprüft.

Der größte Teil all der Fehler, die nur vorübergehend auftreten, wird durch Fehler an Kontakten (Steckverbindungen, Lötstellen, Bondierungen) verursacht. Die dauerhaft auftretenden Fehler sind ohnehin in der Regel einfach festzustellen.

Die Überwachung erfolgt dann bspw. so, daß einerseits in einer ersten Prüfschaltung PS1 über sämtliche Busleitungen hinweg ein Prüfwort, vorzugsweise ein einzelnes Prüfbit P1, gebildet wird und daß andererseits auf der Seite der angeschlossenen Schaltung in derselben Weise in einer zweiten Prüfschaltung PS2 über die entsprechenden Leitungen ein Prüfwort gebildet und mit dem anderen Prüfwort verglichen wird. Dazu muß mindestens eines der beiden Prüfwörter (hier P1) auf die andere Seite übertragen werden. Dabei ist es dann völlig unerheblich, welcher Art die Signale auf den einzelnen Leitungen sind. Selbst Leitungen mit Versorgungsspannungen können miteinbezogen werden. Die Prüfschaltungen können dann, z.B. durch ein Diodennetzwerk, die anliegenden Versorgungsspannungen für ihre eigene Versorgung mitverwenden. Wichtig ist nur, daß die Bildung der Prüfwörter, der Vergleich derselben, oder die Ausgabe eines Fehlersignals nur zu solchen Zeitpunkten erfolgen darf, zu denen auf allen Leitungen definierte Signalzustände vorliegen. Hierzu wird das Vergleichsergebnis von der zweiten Prüfschaltung PS2 mittels eines Taktes T und eines Flipflops FF ausgegeben.

Treten zwischen den überwachten Punkten Laufzeiten auf, wie dies beim Beispiel der Koppelmatrix der Fall ist, dann müssen diese allerdings untereinander gleich sein. Auch die Laufzeit der Prüfwörter muß aneinander angepaßt sein. In solchen Fällen müssen dann allerdings auch alle Signale in dieselbe Richtung laufen.

Die Erfindung ist auch auf Schaltungsanordnungen anwendbar, die hierarchisch aufgebaut sind. Dies ist sehr häufig der Fall.

Eine Mehrzahl integrierter Schaltungen ist in der Regel auf einer Leiterplatte zu einer Baugruppe, mehrere Leiterplatten über eine rückseitige Leiterplatte (Backpanel) zu einer größeren Einheit und mehrere Einheiten zu einem System zusammengefaßt.

Nun kann in jeder integrierten Schaltung über alle ihre Anschlußleitungen ein Prüfbit gebildet und auf die Leiterplatte ausgegeben werden. Auf der Leiterplatte kann dann wieder über alle von der Leiterplatte wegführenden Leitungen ein Prüfbit gebildet werden. Die hierfür erforderlichen Prüfschaltungen können in den Steckern und Buchsen integriert sein. Beim Vergleich der Prüfbits untereinander muß dann berücksichtigt weden, daß die Signale auf den einzelnen Leitungen in mehr oder weniger viele der insgesamt gebildeten Prüfbits eingehen. Dies ist vergleichbar mit der Bildung der Paritätskorrektur in der Schaltung nach Figur 3.

Dies kann in den höheren Hierarchieebenen forgesetzt werden.

Viele der bekannten Fehlerkorrekturverfahren können verwendet werden, um einen auf die erfindungsgemäße Weise erkannten Fehler auch zu korrigieren.

**Ansprüche**

1. Verfahren zur Überprüfung von Verbindungen zwischen einer ersten Gruppe von Leitungen ($D_i$, $C_j$) und einer zweiten Gruppe von Leitungen ($Y_j$) mittels Prüfwörtern, **dadurch gekennzeichnet**, daß zeitparallel aus den Signalen auf den Leitungen ($D_i$, $C_j$) der ersten Gruppe laufend ein erstes Prüfwort (PB1), und ferner nach denselben Bildungsgrundsätzen aus den Signalen auf den Leitungen der zweiten Gruppe ebenfalls zeitparallel ein zweites Prüfwort (PB2) abgeleitet wird, daß beide Prüfwörter verglichen werden (Syndromberechnung), und daß bei einer Abweichung der Prüfwörter voneinander eine Fehleranzeige erfolgt.

2. Verfahren nach Anspruch 1, insbesondere zur Überprüfung einer Raummultiplex-Koppelfeldmatrix (K), bei der eine oder mehrere einer Vielzahl von Eingangsleitungen ($D_i$, $C_j$) mit einer oder mehreren einer Vielzahl von Ausgangsleitungen ($Y_j$) über Steuereinrichtungen (OD, ED) verbindbar sind, **dadurch gekennzeichnet**, daß laufend das erste Prüfwort (PB1) aus den Signalen auf den Eingangsleitungen ($D_i$, $C_j$), sowie ferner nach denselben Bildungsgrundsätzen aus den Signalen auf den Ausgangsleitungen laufend das zweite Prüfwort (PB2) abgeleitet wird und beide Prüfwörter verglichen werden.

3. Verfahren nach Anspruch 1 oder 2, dadurch gekennzeichnet, daß die Ableitung des ersten Prüfwortes (PB1) aus den Signalen auf den Leitungen ($D_i$, $C_j$) der ersten Gruppe in einem Paritätsgenerator (PG) erfolgt, an den alle Eingangsleitungen parallel als Eingänge geführt sind, daß ferner die Ableitung des zweiten Prüfwortes (PB2) in einer Paritätsprüfeinrichtung (PC) erfolgt, an die alle Leitungen ($Y_i$) der zweiten Gruppe parallel als Eingänge geführt sind und daß der Vergleich der Prüfwörter in einer Schalteinrichtung ($G_2$) erfolgt, deren Ausgang die Fehleranzeige betätigt.

4. Verfahren nach Anspruch 1 oder 2, dadurch gekennzeichnet, daß beim Vergleich der Prüfwörter (PB1, PB2) ein in einer Paritätskorrektureinrichtung (PCB) abgeleitetes Hilfsprüfwort berücksichtigt wird, das eine Kompensation eines Prüfwortes (PB2) vornimmt, wenn dieses (PB2) vom anderen Prüfwort deshalb abweicht, weil eine der Leitungen ($D_i$, $C_j$) der ersten Gruppe entweder mit keiner oder mit mehreren Leitungen ($Y_j$) der zweiten Gruppe verbunden ist.

5. Verfahren nach Anspruch 4, dadurch gekennzeichnet, daß bei Prüfung eines Koppelfeldes (K) mit matrixartig in Spalten und Reihen angeordneten vom Zustand je einer Speicherzelle (BC) gesteuerten Schaltzellen (S) in einer ersten Einheit ($S_i$) der Paritätskorrektureinrichtung (PCB) ein Prüfwort unter Auswertung der Speicherzustände (Q) der Speicherzellen (BC) einer Spalte gebildet wird, daß die für die Spalten ermittelten Prüfwörter bei Auftreten eines Signals an einer der Spalte zugeordneten Eingangsleitung ($D_i$, $C_j$) zusammen ($A_i$) zur Bildung eines weiteren Prüfwortes in einer zweiten Einheit ($G_2$) ausgewertet werden, und daß dieses zur Paritätskorrektur beim Vergleich der aus den Signalen auf den Eingangsleitungen ($D_i$, $C_j$) und Ausgangsleitungen ($Y_i$) abgeleiteten Prüfwörter (PB1, PB2) berücksichtigt wird.

6. Verfahren nach Anspruch 5, dadurch gekennzeichnet, daß die für die binären Speicher (BC) je Spalte des matrixartig aufgebauten Koppelfeldes abgeleiteten Prüfwörter in einer Speicherparitätsprüfeinrichtung (SP, $G_5$) unter Bildung eines weiteren Prüfwortes ausgewertet werden, derart, daß eine Fehleranzeige erfolgt, wenn mehr als nur eine Eingangsleitung ($D_i$, $C_j$) mit einer Ausgangsleitung ($Y_i$) infolge eines Fehlers eines Speichers (BC) oder eines Fehlers in seiner Ansteuerung (b) durch einen Eingangsdekoder (ED) erfolgt.

7. Verfahren nach Anspruch 4, dadurch gekennzeichnet, daß in einer Ausgangsparitätsprüfeinrichtung (ODP; $G_6$,$G_7$) bei Vorliegen eines Aktivierungssignales (E) die die Speicher (BC) für die Schaltzellen (S) ansteuernden Steuersignale (a) unter Bildung eines weiteren Prüfwortes ausgewertet werden.

8. Verfahren nach Anspruch 1 oder 2, dadurch gekennzeichnet, daß die Schaltzellen (S) eine binäre Speichereinheit (BC) aufweisen, die in einem Zustand die Durchschaltung eines Signals auf der zugeordneten Eingangsleitung ($D_i$, $C_j$) auf eine zugeordnete Ausgangsleitung ($Y_i$) bewirkt, wobei die Umschaltung in diesem Zustand erfolgt, wenn an diese (BC) ein Steuersignal (a) von einem den Eingangsleitungen zugeordneten Eingangsdekoder (ED) und von einem den Ausgangsleitungen zugeordneten Ausgangsdekoder (OD) gelangt.

9. Verfahren nach Anspruch 1 oder 2, dadurch gekennzeichnet, daß das erste und das zweite Prüfwort (PB1;PB2) aus je einer Zahl besteht, die angibt, wieviele Eingangs- bzw. Ausgangsleitungen gleichzeitig ein bestimmtes Signal führen.

10. Verfahren nach Anspruch 9, dadurch gekennzeichnet, daß das erste und das zweite Prüfwort (PB1;PB2) ein Paritätsbit ist, das angibt, ob eine gerade oder eine ungerade Anzahl von Eingangsleitungen ($D_i$, $C_j$) bzw. Ausgangsleitungen ($Y_i$) ein bestimmtes Signal führt.

11. Verfahren nach Anspruch 10, dadurch gekennzeichnet, daß die Einrichtungen (P, PG, PC, PCB, ODP, SP) zur Ableitung von Prüfworten durch Exklusiv-ODER-Verknüpfungsglieder gebildet werden.

12. Anordnung zur Durchführung eines Verfahrens nach Anspruch 1 oder einem der folgenden, gekennzeichnet durch einen Paritätsgenerator (PG) dem als Eingänge die Leitungen ($D_i$, $C_j$) der ersten Gruppe zugeführt sind, und der daraus das erste Prüfwort (PB1) ableitet, durch eine Paritätsprüfeinrichtung (PC), der als Eingänge die Leitungen ($Y_j$) der zweiten Gruppe zugeführt sind und die daraus das zweite Prüfwort (PB2) ableitet, sowie ferner durch Schalteinrichtungen (G2) zum Vergleich der Prüfworte.

FIG.1

EP 0 379 695 A1

EP 0 379 695 A1

FIG.2

FIG.4

FIG.3

EP 0 379 695 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 596 015  (CLEMENTS et al.) * Zusammenfassung; Spalte 1, Zeile 51 - Spalte 2, Zeile 11; Spalte 3, Zeilen 24-66; Figuren 1,2 * | 1,12 | H 04 M  3/24 H 04 Q  11/04 |
| Y | | 2,3 | |
| A | | 5-11 | |
| | --- | | |
| Y | EP-A-0 217 555  (STC) * Zusammenfassung; Spalte 1, Zeilen 6-30; Spalte 2, Zeilen 49-55; Spalte 3, Zeilen 27-52; Ansprüche 1,2; Figuren 1,2 * | 2,3 | |
| A | | 4,5 | |
| | --- | | |
| A | DE-A-3 604 607  (SIEMENS) * Spalte 5, Zeile 65 - Spalte 6, Zeile 5; Spalte 6, Zeilen 39-43; Figur 1 * ----- | 5-11 | |

RECHERCHIERTE SACHGEBIETE (Int. Cl.5)

H 04 M
H 04 Q

Der vorliegende Recherchenbericht wurde für alle Patentansprüche erstellt

| Recherchenort | Abschlußdatum der Recherche | Prüfer |
|---|---|---|
| DEN HAAG | 23-03-1990 | O'REILLY D.J.K. |